# DEMANDE DE BREVET EUROPEEN

(11) **EP 3 872 459 A1**
(43) Date de publication de la demande: **01.09.2021**
(21) Numéro de dépôt: 21159649.9
(22) Date de dépôt: 26.02.2021
(51) Int. Cl.: G01F 23/296, G01N 29/024, G01N 29/22, G01S 15/08, B60K 15/03, B60K 13/04, G01N 29/34, G01S 7/52, G01S 15/88

(54) **SYSTÈME DE MESURE D'UN PARAMÈTRE D'UN FLUIDE**

(30) Priorité: 28.02.2020 FR 2002013
(71) Demandeur: Plastic Omnium Advanced Innovation And Research, 1130 Bruxelles (BE)
(72) Inventeur: DARBA, Araz, 1130 BRUXELLES (BE)
(74) Mandataire: LLR

(57) **Abrégé**

Système (1) de mesure d'un paramètre d'un fluide à partir d'une onde acoustique, comprenant un premier capteur acoustique (10) destiné à détecter une onde acoustique réfléchie par un autre système (2) dont la fonction principale n'est pas de réfléchir une onde acoustique, l'autre système (2) étant pourvu d'une surface réfléchissante concave telle qu'une onde acoustique réfléchie par la surface réfléchissante concave est dirigée vers le premier capteur acoustique (10).

## Description

L'invention concerne un système de mesure d'un paramètre d'un fluide tel que le niveau, la qualité et/ou la concentration. Plus particulièrement, l'invention concerne un système de mesure d'un paramètre d'un fluide contenu dans un réservoir de fluide.

L'invention concerne également un réservoir de fluide pour matériel fixe ou mobile (véhicule sur route, fer, mer, air, espace), notamment, pour véhicule automobile.

Le fluide dont il est question est, par exemple, et non limitativement, du carburant tel que de l'essence ou du gazole pour un moteur thermique, une solution aqueuse d'urée tel que de l'AdBlue® pour la dépollution de gaz d'échappement d'un moteur thermique, de l'eau déminéralisé pour l'injection d'eau dans le circuit d'admission d'air d'un moteur thermique, un additif pour du carburant d'un moteur thermique, un combustible pour une pile à combustible, un produit nettoyant pour nettoyer des capteurs tels que des LIDARs et des RADARs.

La Demanderesse a proposé dans sa demande de brevet FR3069495A1, un réservoir de fluide pour véhicule automobile comportant un corps agencé pour recevoir un fluide et un système de mesure d'un paramètre du fluide dans le réservoir à partir d'une onde acoustique dans lequel le système de mesure comprend au moins un capteur acoustique et un élément de réflexion acoustique formé par une partie du corps du réservoir. A la suite de travaux de recherche, la Demanderesse a constaté que, d'une part, l'onde acoustique était davantage déviée par le corps du réservoir que réfléchie vers le capteur acoustique et que, d'autre part, pour les parties du corps du réservoir capable de réfléchir l'onde acoustique vers le capteur acoustique, la réflectivité acoustique était trop faible pour permettre une mesure fiable et précise d'un paramètre du fluide.

L'invention a pour but de remédier aux inconvénients précités en proposant un système de mesure garantissant un meilleur niveau de fiabilité et une plus grande précision de la mesure d'un paramètre d'un fluide quand l'onde acoustique n'est pas réfléchie par un système dont la fonction principale est de réfléchir une onde acoustique. L'invention a également pour but de proposer un réservoir de fluide pour véhicule automobile comprenant un tel système.

A cet effet, l'invention a pour objet un réservoir de fluide pour véhicule automobile comportant un corps creux agencé pour contenir :
- un premier fluide,
- un second fluide,
- un système de mesure d'au moins un paramètre du premier fluide à partir d'au moins une onde acoustique,
- un autre système, dans lequel le système de mesure comprend un boîtier destiné à loger :
   - un premier capteur acoustique configuré pour être immergé dans le premier fluide et destiné à détecter une première onde acoustique apte à se propager dans le premier fluide le long d'un premier axe de propagation après avoir été réfléchie par l'autre système dont la fonction principale n'est pas de réfléchir une onde acoustique, l'autre système étant pourvu d'une surface réfléchissante concave telle qu'une onde acoustique réfléchie par la surface réfléchissante concave est dirigée vers le premier capteur acoustique,
   - un deuxième capteur acoustique configuré pour être immergé dans le premier fluide et destiné à détecter une deuxième onde acoustique distincte de la première onde acoustique, la deuxième onde acoustique étant apte à se propager dans le premier fluide le long d'un deuxième axe de propagation après avoir été réfléchie par une surface de séparation du premier fluide avec le second fluide,
   dans lequel l'autre système est un composant interne du réservoir.

L'utilisation d'un boîtier permet d'intégrer plusieurs capteurs dans un composant unique offrant ainsi un meilleur packaging du système de mesure.

En outre, en immergeant le premier capteur acoustique, il n'y a pas de milieu étranger à la mesure à traverser, ceci permet d'obtenir une mesure plus fiable et plus directe d'un paramètre du premier fluide. En effet, si le premier capteur acoustique n'est pas immergé, la première onde acoustique doit traverser au moins un milieu étranger à la mesure (par exemple la paroi du réservoir contenant le premier fluide) avant d'atteindre le premier capteur acoustique, ceci n'est pas satisfaisant car cela oblige à filtrer les perturbations créées par ce milieu étranger.

La première onde acoustique permet, par exemple, de déterminer un paramètre intrinsèque du premier fluide, par exemple la vitesse de propagation de la première onde acoustique dans le premier fluide. La deuxième onde acoustique permet, par exemple, de déterminer un paramètre extrinsèque du premier fluide, par exemple la hauteur du premier fluide dans le réservoir.

Le fait d'utiliser un composant interne du réservoir comme autre système permet d'utiliser un composant préexistant dans le réservoir pour réfléchir la première onde acoustique.

Avantageusement selon l'invention, la forme concave de la surface réfléchissante permet d'agir comme un guide d'onde acoustique qui assure une fonction d'orientation et de concentration de l'onde réfléchie. Grâce à cette disposition, l'onde acoustique détectée par le premier capteur acoustique est de meilleure qualité permettant, ainsi, de réaliser une mesure d'un paramètre du fluide plus fiable et plus précise.

Selon des caractéristiques additionnelles du système selon l'invention :
- la surface réfléchissante concave est tournée vers le premier capteur acoustique.

Ceci permet de raccourcir le chemin de propagation de l'onde acoustique réfléchie.
- la surface réfléchissante concave est une surface intérieure d'un cylindre circulaire d'axe AA' et de rayon R. Ceci permet de mieux orienter et concentrer les ondes réfléchies.
- le premier capteur acoustique comprend un premier détecteur acoustique d'axe de référence BB' situé à une distance fixe d de la surface réfléchissante concave telle que d ≥ 0,20·R, de préférence, d ≥ 0,25·R, et où d est mesurée sur l'axe de référence BB' entre la face sensible du détecteur acoustique et le point d'intersection de l'axe BB' avec la surface réfléchissante concave. En effet, la Demanderesse a découvert que pour une distance d inférieure à 0,2·R, la face sensible du détecteur acoustique est trop proche de la surface réfléchissante concave pour bénéficier pleinement des avantages de la courbure de la surface réfléchissante concave. En effet, quand d < 0,20·R, une trop petite partie de l'onde acoustique réfléchie est dirigée vers le premier capteur acoustique. La face sensible d'un détecteur acoustique est la surface où est reçu l'onde acoustique. L'axe de référence est l'axe perpendiculaire à la face sensible passant par son centre.
- la surface réfléchissante concave est une surface intérieure d'une parabole d'axe focal BB' et de distance focale d. Ceci permet de focaliser les ondes réfléchies en un point ou une ligne.
- le deuxième capteur acoustique comprend un deuxième détecteur acoustique d'axe de référence CC' tel que l'angle α entre l'axe BB' et l'axe CC' est compris entre 45° et 135°, de préférence l'angle α est égal à 90°. Grâce à cette disposition, on évite que le chemin de propagation de l'onde acoustique réfléchie par l'autre système et le chemin de propagation de l'onde acoustique réfléchie par la surface de séparation du fluide avec l'autre fluide se superposent. Ceci permet d'effectuer des mesures simultanées avec les deux capteurs acoustiques sans créer d'interférence. Par exemple, une mesure de la vitesse de propagation de l'onde acoustique dans le fluide avec le premier capteur acoustique et une mesure de la hauteur du fluide avec le deuxième capteur acoustique. En effet, dans le cas d'un fluide contenu dans un réservoir de fluide, l'autre fluide est un gaz, typiquement de l'air, de sorte que la hauteur du fluide permet de déduire le niveau de remplissage du réservoir et le volume restant de fluide.
- le deuxième capteur acoustique travaille à une fréquence différente du premier capteur acoustique. Ceci permet d'éviter des effet parasites comme, par exemple, le phénomène de diaphonie (« cross-talk » en langue anglaise).
- le premier et/ou le deuxième capteur est un récepteur acoustique, par exemple, un transducteur à ultrasons apte à recevoir une onde ultrasonique. Ceci permet de travailler à une fréquence acoustique insensible aux vibrations et aux sons parasites.
- le premier et/ou le deuxième capteur est un émetteur/récepteur acoustique, par exemple, un transducteur à ultrasons apte à émettre et recevoir une onde ultrasonique. Ceci permet de réunir les fonctions de réception et d'émission d'onde acoustique dans un composant unique tout en travaillant à une fréquence acoustique insensible aux vibrations et aux sons parasites.
- le système de mesure comprend en outre un capteur de température et/ou un capteur de qualité. Un capteur de qualité est un capteur apte à mesurer un paramètre physico-chimique caractérisant le fluide, par exemple, le niveau de pureté du fluide, sa phase (liquide, solide ou gazeux), sa concentration en ions s'agissant de l'eau, ou sa concentration en urée s'agissant d'une solution aqueuse d'urée. Le capteur de qualité est, par exemple, un capteur de conductivité électrique, un capteur de résistivité électrique, un détecteur capacitif, un capteur de dureté, un capteur de densité, un capteur de turbidité ou une sonde pH. Ceci permet de fournir plus d'information sur la nature et l'état du fluide.
- le système comprend en outre un module électronique pour recevoir et traiter des données du ou des capteurs et les communiquer à une unité de contrôle électronique, par exemple, une unité de contrôle électronique d'un véhicule.
- le capteur de température et/ou le capteur de qualité est logé dans le boîtier. Ceci permet d'intégrer davantage de capteurs dans un composant unique, le boîtier en l'occurrence, offrant ainsi un meilleur packaging du système de mesure.
- le premier fluide est choisi parmi un carburant, une solution aqueuse d'urée, de l'eau déminéralisé, un additif, un combustible, un produit nettoyant et le second fluide est un gaz.
- le composant interne du réservoir est choisi parmi un module d'alimentation en fluide, un pot stabilisateur (« swirl pot » en langue anglaise), un dispositif de chauffage et son support, une pompe et son support, un filtre et son support. Ceci permet d'utiliser le système de mesure dans n'importe quel type de réservoir comprenant un composant interne.
- l'autre système comprend une structure métallique sur laquelle est réfléchie l'onde acoustique. Ceci permet d'augmenter la réflectivité acoustique de l'autre système.

L'invention a enfin pour objet un véhicule automobile comportant le réservoir précité. Plus précisément, le réservoir peut être, par exemple, un réservoir de carburant pour un moteur thermique, un réservoir d'une solution aqueuse d'urée pour la dépollution de gaz d'échappement d'un moteur thermique, un réservoir d'eau déminéralisé pour l'injection d'eau dans le circuit d'admission d'air d'un moteur thermique, un réservoir d'additif pour du carburant d'un moteur thermique, un réservoir de combustible pour une pile à combustible ou un réservoir de produit nettoyant pour nettoyer des capteurs tels que des LIDARs et des RADARs.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective écorchée d'une partie d'un réservoir de fluide comportant un système de mesure selon l'invention,
[Fig. 2] la figure 2 est une vue de haut schématique d'un détail du réservoir de fluide illustré à la figure 1,
[Fig. 3] la figure 3 est une vue schématique montrant un système de mesure selon l'invention comprenant deux capteurs acoustiques.

### Description détaillée

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

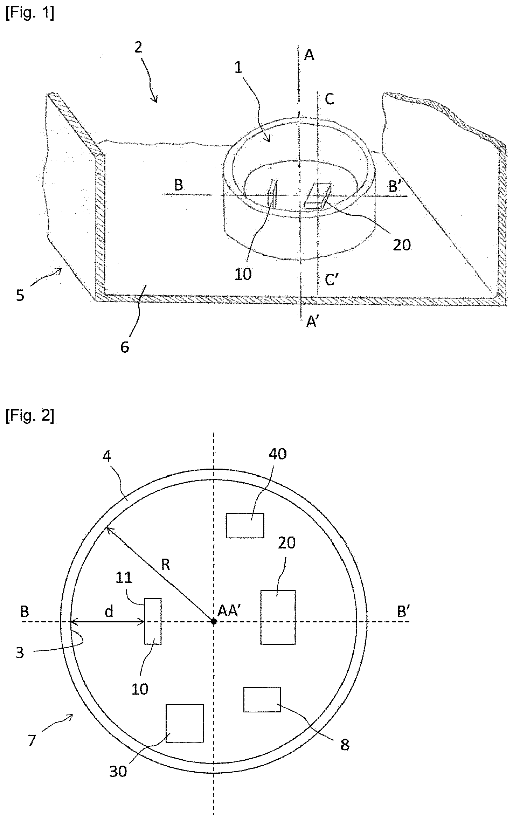

Les figures 1 et 2 illustrent un réservoir de fluide 5 pour véhicule automobile comportant un corps creux 6 agencé pour contenir un premier fluide (non représenté), un second fluide (non représenté), un système 1 de mesure d'au moins un paramètre du premier fluide à partir d'au moins une onde acoustique, un autre système 2, dans lequel le système 1 de mesure comprend un boîtier (non représenté) destiné à loger un premier capteur acoustique 10 configuré pour être immergé dans le premier fluide et destiné à détecter une première onde acoustique apte à se propager dans le premier fluide le long d'un premier axe de propagation après avoir été réfléchie par l'autre système 2 dont la fonction principale n'est pas de réfléchir une onde acoustique. L'autre système 2 est pourvu d'une surface réfléchissante concave telle qu'une onde acoustique réfléchie par la surface réfléchissante concave est dirigée vers le premier capteur acoustique 10. Le boîtier loge également un deuxième capteur acoustique 20 configuré pour être immergé dans le premier fluide et destiné à détecter une deuxième onde acoustique distincte de la première onde acoustique, la deuxième onde acoustique étant apte à se propager dans le premier fluide le long d'un deuxième axe de propagation après avoir été réfléchie par une surface de séparation du premier fluide avec le second fluide. L'autre système 2 est un composant interne du réservoir 5.

Avantageusement, la surface réfléchissante concave est tournée vers le premier capteur acoustique 10. La surface réfléchissante concave est une surface intérieure 3 d'un cylindre circulaire 4 d'axe AA' et de rayon R. Dans cet exemple, le cylindre circulaire 4 fait partie d'un composant interne du réservoir 5, par exemple, un pot stabilisateur 7.Le réservoir 5 est, par exemple, un réservoir d'une solution aqueuse d'urée ou d'eau. Le réservoir 5 de fluide est un réservoir pour matériel fixe ou mobile, notamment, pour véhicule automobile (non représenté).. Le système 1 baigne dans le fluide et le paramètre mesurée est la vitesse de propagation de l'onde acoustique dans le fluide.

Le composant interne du réservoir est choisi parmi un module d'alimentation en fluide (non représenté), le pot stabilisateur 7, un dispositif de chauffage et son support (non représenté), une pompe et son support (non représenté), un filtre et son support (non représenté). Le corps creux 6 est agencé pour contenir le module d'alimentation en fluide, le pot stabilisateur 7, le dispositif de chauffage et son support, la pompe et son support, le filtre et son support.

Avantageusement, l'autre système 2 comprend une structure métallique (non représentée) sur laquelle est réfléchie l'onde acoustique.

Le premier capteur acoustique 10 comprend un premier détecteur acoustique 15 d'axe de référence BB' situé à une distance fixe d de la surface réfléchissante concave telle que d ≥ 0,20·R, de préférence, d ≥ 0,25-R, et où d est mesurée sur l'axe de référence BB' entre la face sensible 11 du détecteur acoustique 15 et le point d'intersection de l'axe BB' avec la surface réfléchissante concave. La face sensible 11 du détecteur acoustique 15 est la surface où est reçu l'onde acoustique. L'axe de référence BB' est l'axe perpendiculaire à la face sensible 11 passant par son centre.

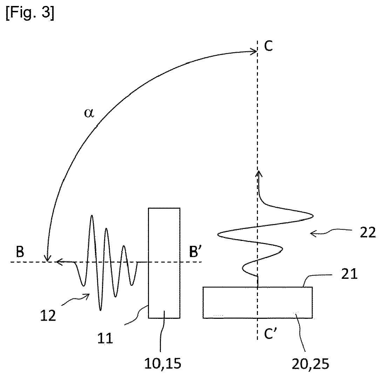

Le deuxième capteur acoustique 20 comprend un détecteur acoustique 25 d'axe de référence CC' tel que l'angle α entre l'axe BB' et l'axe CC' est compris entre 45° et 135°, de préférence l'angle α est égal à 90° (voir aussi figure 3). L'autre fluide est un gaz, typiquement de l'air. Par cette disposition, le paramètre mesurée est le niveau de remplissage du réservoir de fluide.

Le système 1 comprend en outre un capteur de température 30 et/ou un capteur de qualité 40. Par cette disposition, d'autres paramètres du fluide sont mesurés.

Avantageusement, le capteur de température 30 et/ou le capteur de qualité 40 est logé dans le boîtier.

La figure 3 illustre l'orientation mutuelle du premier 10 et deuxième 20 capteur acoustique. Dans cet exemple, l'angle α entre l'axe BB' et l'axe CC' est égal à 90°. La face sensible 21 du détecteur acoustique 25 est la surface où est reçu l'autre onde acoustique. L'axe de référence CC' est l'axe perpendiculaire à la face sensible 21 passant par son centre.

Le deuxième capteur acoustique 20 travaille à une fréquence différente du premier capteur acoustique 10. La fréquence acoustique du premier capteur 10 est illustré par la courbe 12 et la fréquence acoustique du deuxième capteur 20 est illustré par la courbe 22.

Avantageusement, le premier capteur 10 et/ou le deuxième capteur 20 est un émetteur/récepteur acoustique, par exemple, un transducteur à ultrasons apte à émettre et recevoir des ondes ultrasoniques. Dans une alternative (non représentée), le premier capteur 10 et/ou le deuxième capteur 20 est un récepteur acoustique, par exemple, un transducteur à ultrasons apte à recevoir des ondes ultrasoniques. Dans cette alternative, l'onde acoustique réfléchie est générée par une autre source d'ondes ultrasoniques (non représentée).

Le système 1 comprend en outre un module électronique 8, par exemple, un microcontrôleur, pour recevoir et traiter des données du ou des capteur(s) 10, 20, 30, 40 et les communiquer à une unité de contrôle électronique (non représentée) du véhicule. Avantageusement, le boîtier destiné à loger le ou les capteur(s) 10, 20, 30, 40 loge aussi le module électronique 8.

Le module électronique 8 utilise la température détectée par le capteur de température 30 pour calculer la vitesse de propagation de l'onde acoustique traversant le fluide en fonction de la température. Dans l'exemple où le premier capteur acoustique 10 est un émetteur/récepteur acoustique, le module électronique 8 génère un premier signal de commande du premier capteur acoustique 10. En réponse, le premier capteur acoustique 10 génère et transmet une onde acoustique vers l'autre système 2 et reçoit un écho de l'onde acoustique réfléchie par l'autre système 2. Le module électronique 8 détermine le temps écoulé entre la transmission de l'onde acoustique et la réception de l'écho par le premier capteur acoustique 10. L'autre système 2 étant situé à une distance fixe du premier capteur acoustique 10, le module électronique 8 est capable de déterminer la concentration et la présence ou non de contaminant dans le fluide en fonction du temps écoulé et de la température détectée du fluide.

Dans une configuration où le système 1 comprend au moins le premier capteur acoustique 10, le deuxième capteur acoustique 20 et le module électronique 8, le système 1 peut être monté sur le réservoir 5 de fluide, en particulier, dans le corps creux 6, sans tenir compte de l'orientation spatiale du système 1. En effet, selon que le système 1 est monté sur le fond du réservoir, sur une paroi latérale du réservoir ou sur le haut du réservoir, le module électronique 8 est capable de déterminer lequel des deux capteurs acoustiques 10, 20 est apte à mesurer la hauteur du fluide et lequel des deux capteurs acoustiques 10, 20 est apte à mesurer la vitesse de propagation de l'onde acoustique dans le fluide. Ceci permet plus de liberté de montage du système 1 sur le réservoir 5 de fluide.

### Liste de références

1 : système de mesure d'un paramètre d'un fluide à partir d'une onde acoustique,
2 : autre système dont la fonction principale n'est pas de réfléchir une onde acoustique,
3 : surface intérieure du cylindre circulaire,
4 : cylindre circulaire,
5 : réservoir de fluide,
6 : corps creux,
7 : pot stabilisateur,
8 : module électronique,
10 : premier capteur acoustique,
11 : face sensible du détecteur acoustique du premier capteur acoustique,
12 : courbe de la fréquence acoustique du premier capteur acoustique,
15 : détecteur acoustique du premier capteur acoustique,
20 : deuxième capteur acoustique,
21 : face sensible du détecteur acoustique du deuxième capteur acoustique,
22 : courbe de la fréquence acoustique du deuxième capteur acoustique,
25 : détecteur acoustique du deuxième capteur acoustique,
30 : capteur de température,
40 : capteur de qualité.

## Revendications

1. Réservoir (5) de fluide pour véhicule automobile, **caractérisé en ce qu'**il comporte un corps creux (6) agencé pour contenir :
• un premier fluide,
• un second fluide,
• un système (1) de mesure d'au moins un paramètre du premier fluide à partir d'au moins une onde acoustique,
• un autre système (2),
dans lequel le système (1) de mesure comprend un boîtier destiné à loger :
- un premier capteur acoustique (10) configuré pour être immergé dans le premier fluide et destiné à détecter une première onde acoustique apte à se propager dans le premier fluide le long d'un premier axe de propagation après avoir été réfléchie par l'autre système (2) dont la fonction principale n'est pas de réfléchir une onde acoustique, l'autre système (2) étant pourvu d'une surface réfléchissante concave telle qu'une onde acoustique réfléchie par la surface réfléchissante concave est dirigée vers le premier capteur acoustique (10),
- un deuxième capteur acoustique (20) configuré pour être immergé dans le premier fluide et destiné à détecter une deuxième onde acoustique distincte de la première onde acoustique, la deuxième onde acoustique étant apte à se propager dans le premier fluide le long d'un deuxième axe de propagation après avoir été réfléchie par une surface de séparation du premier fluide avec le second fluide,
dans lequel l'autre système (2) est un composant interne du réservoir (5).

2. Réservoir selon la revendication 1, dans lequel la surface réfléchissante concave est une surface intérieure (3) d'un cylindre circulaire (4) d'axe AA' et de rayon R.

3. Réservoir selon la revendication 2, dans lequel le premier capteur acoustique (10) comprend un premier détecteur acoustique (15) d'axe de référence BB' situé à une distance fixe d de la surface réfléchissante concave telle que d ≥ 0,20·R, de préférence, d ≥ 0,25·R, et où d est mesurée sur l'axe de référence BB' entre la face sensible (11) du détecteur acoustique (15) et le point d'intersection de l'axe BB' avec la surface réfléchissante concave.

4. Réservoir selon la revendication précédente, dans lequel le deuxième capteur acoustique (20) comprend un deuxième détecteur acoustique (25) d'axe de référence CC' tel que l'angle α entre l'axe BB' et l'axe CC' est compris entre 45° et 135°, de préférence l'angle α est égal à 90°.

5. Réservoir selon l'une quelconque des revendications précédentes, dans lequel le système (1) de mesure comprend en outre un capteur de température (30) et/ou un capteur de qualité (40).

6. Réservoir selon la revendication précédente, dans lequel le capteur de température (30) et/ou le capteur de qualité (40) est logé dans le boîtier.

7. Réservoir selon l'une quelconque des revendications précédentes, dans lequel le premier fluide est choisi parmi un carburant, une solution aqueuse d'urée, de l'eau déminéralisé, un additif, un combustible, un produit nettoyant et le second fluide est un gaz.

8. Réservoir selon l'une quelconque des revendications précédentes, dans lequel le composant interne du réservoir est choisi parmi un module d'alimentation en fluide, un pot stabilisateur (7), un dispositif de chauffage et son support, une pompe et son support, un filtre et son support.

9. Véhicule automobile **caractérisé en ce qu'**il comporte un réservoir selon l'une quelconque des revendications précédentes.
